Europäisches Patentamt

European Patent Office (11) Publication number: **0 051 431**

Office européen des brevets **A1**

(12) **EUROPEAN PATENT APPLICATION**

(21) Application number: **81305083.8**

(22) Date of filing: **28.10.81**

(51) Int. Cl.³: **B 65 G 47/68**

(30) Priority: **04.11.80 GB 8035321**

(43) Date of publication of application:
**12.05.82 Bulletin 82/19**

(84) Designated Contracting States:
**AT BE CH DE FR GB IT LI LU NL SE**

(71) Applicant: **KENSAL CONVEYORS LIMITED**
**"Chancery House" 53/64 Chancery Lane**
**London WC2A 1QU(GB)**

(72) Inventor: **Southwood, Anthony John**
**71 Hertfield Avenue**
**Elstree Hertfordshire(GB)**

(72) Inventor: **Southwood, John Charles**
**42 Theobalds Street**
**Borehamwood Hertfordshire(GB)**

(72) Inventor: **Mullineux, Frederick George**
**128 Kincross Crescent**
**Sundon Park Luton Bedfordshire(GB)**

(74) Representative: **Ranson, Arthur Terence et al,**
**W.P. Thompson & Co. Coopers Building Church Street**
**Liverpool L1 3AB(GB)**

(54) Article combiner or consolidator.

(57) The combiner is one comprising angled guides or walls (14) which converge from a spacing wide enough to accommodate batches or rows of the articles to a spacing (8) which only allows the articles to pass onwardly in a single file and is characterised in that the combiner (18) comprises an endless band (22) movable in a vertical plane with an active run (III-III) thereof forming part of a series of guides (14, 38) converging from the article inlet in the direction of article travel to the article outlet (B) of the combiner; the band carrying a plurality of outwardly-protruding, article-engaging members (24), and being provided with drive means (32,34) for moving the band consequent upon the absence of articles leaving the article outlet (B), signalling a possible jamming of articles within the guides.

Fig 1

./...

_Fig 2_

1.

## DESCRIPTION

"ARTICLE COMBINER OR CONSOLIDATOR"

This invention concerns an article combiner or consolidator.

When articles, such as containers, emerge from apparatus, such as washing or sterilizing plants, in batches or rows each containing a plurality of articles, it is often necessary to combine the batches or rows so that a single line of articles is formed during the conveying of them to another station or operation such as a filling or inspection stage. In so doing, and consequently in transferring the articles from one or more conveyors moving at a certain speed, from say a cleaning plant, to a single conveyor at a greater speed, the articles are usually guided or consolidated into a single line by angled guides or side walls of the conveyor which converge from a spacing wide enough to accommodate the batches or rows to one which only allows the articles to pass onwardly, say to a filling machine, in single file.

With such an arrangement, unless the convergence of the guide walls is very gradual, and this requires a great length for the consolidation stage, there is a possibility of the articles jamming and locking together, thereby interrupting the flow of articles. This has previously been overcome by providing a moving section in one of the converging guides, the section comprising a plurality of rollers or wheels mounted on vertical or substantially vertical spindles, the whole section being reciprocated continuously, or intermittently whenever a jam occurred, which reciprocation or shuffling was intended to free any actual or potential jamming of articles. These arrangements have proved

2.

only 90% successful and one object of the present invention is to provide an arrangement which is more reliable and effective.

According to the present invention, there is provided an article combined for use with a conveyor, comprising angled guides or walls which converge from a spacing wide enough to accommodate batches or rows of the articles to a spacing which only allows the articles to pass onwardly in a single file, characterised in that the combiner comprises an endless band movable in a vertical plane with an active run thereof forming part of a series of guides converging from the article inlet in the direction of article travel to the article outlet of the combiner; the band carrying a plurality of outwardly-protruding, article-engaging members, and being provided with drive means for moving the band consequent upon the absence of articles leaving the article outlet, signalling a possible jamming of articles within the guides.

Preferably the combiner embodies a sensor or limit switch which senses such absence, and may also incorporate a timer which interrupts the drive to the movable band in the event that articles are not sensed in the outlet within a predetermined time after actuation of the drive. Conveniently the combiner also embodies a pressure-actuated switch, in the vicinity of the article inlet, which operates the drive in the event of a build-up of pressure amongst articles enter- ing the combiner that fail to reach the exit end.

When driven the band may move in the same direction as article travel or may be opposite thereto.

The article-engaging blades are preferably contoured to avoid presenting a sharp edged article- engaging surface, and may be in the form of non-rotat-

3.

ing rollers.  Conveniently, however, they are in the form of T-shaped blades or tongues of a synthetic plastics or any other suitable material and the opposite lateral faces of the surface of the blades or tongues engaging the articles may be chamfered.

The drive to the movable band may be pneumatic, hydraulic or electric, as may be the or each sensor or limit switch.  The combiner may also incorporate an emergency stop and re-set control.

The invention will now be further described by way of example with reference to the accompanying diagrammatical drawings, in which:-

Figure 1 is a perspective plan view showing the general arrangement of a combiner according to the invention in association with article-conveying equipment;

Figure 2 is a plan view of an  endless band of the combiner with parts omitted in the interest of clarity;

Figure 3 is a sectional side elevation of the endless band of Figure 2, taken on line X-X of Figure 2, and

Figure 4 is an end elevation taken substantially along the line Y-Y on Figure 3.

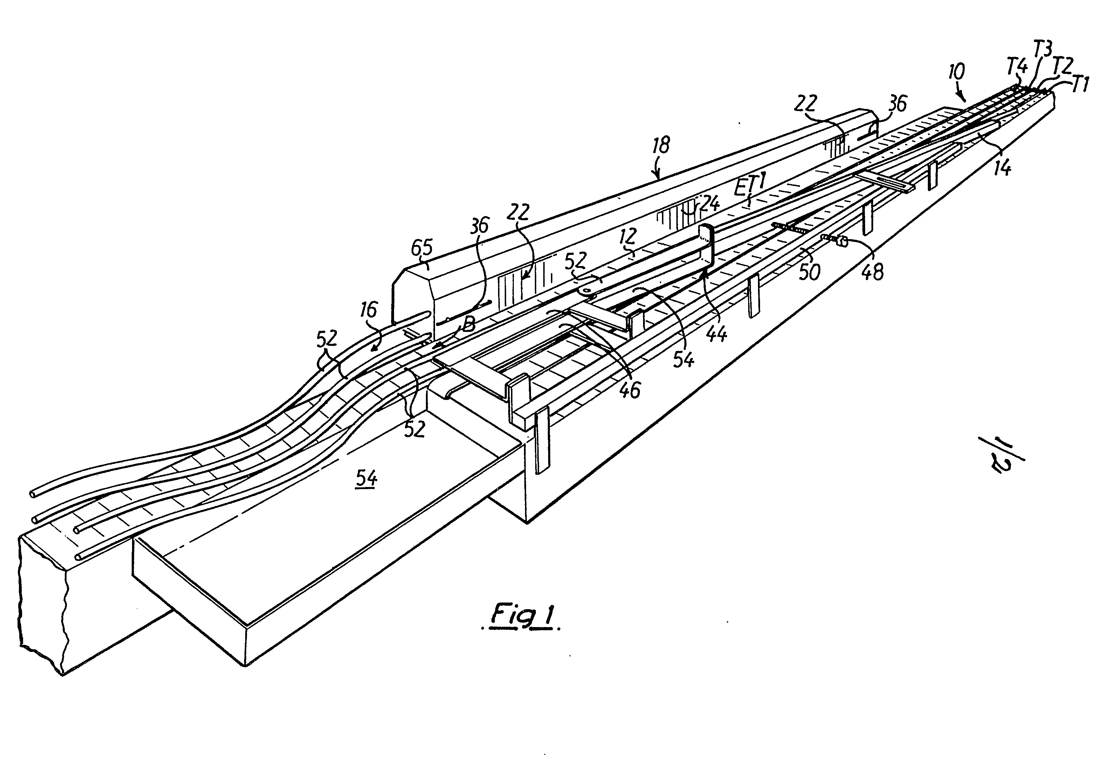

With reference to Figure 1 rows of articles (not shown) for instance, bottles, carried by a conveyor 10 in the direction of arrow A from a washing or sterilizing plant are arranged in formation on the several tracks T1, T2, T3 and T4 of the conveyor.

In order to consolidate the articles or combine them into a single row the container provides a guide member 14 inclined so that the articles are forced into a converging web which eventually develops into a

4.

single line guide 16 so that the articles leave on an exit track ET1 of an exit conveyor 12 in single file in the direction of arrow B.

To prevent or obviate jamming of the articles as they converge from a plurality of lines into a single line the invention provides a combiner indicated generally by the reference 18 on Figure 1.

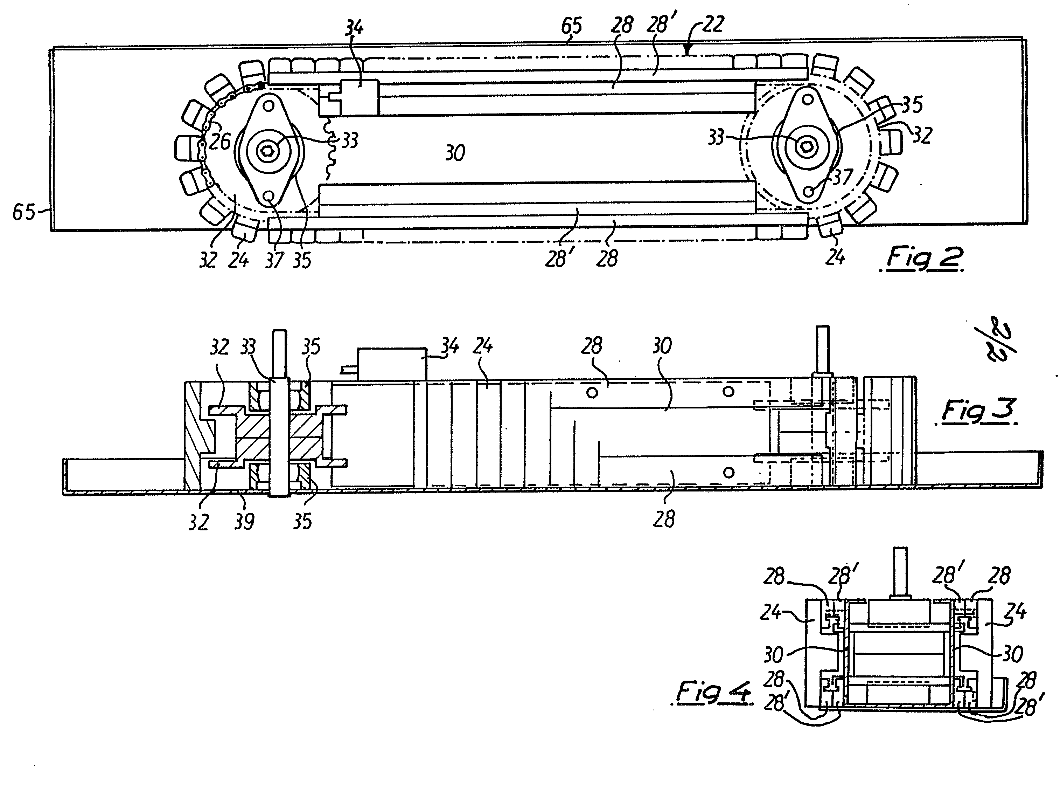

Referring now to Figures 1, 2, 3 and 4 it will be seen that the combiner consists essentially of a travelling band 22 which carries a plurality of outwardly projecting article engaging blades or tongues 24 carried by a pair of chains or belts 26, an upper and a lower one, a part of the upper one of which is seen at 26, which also form part of the band. Chains or bands 26 are endless in configuration and run in respective upper and lower chain runner supports (see Fig. 4 in particular) formed by two rails 28,28' bolted to a wall section 30 at each side of the conveyor. The article engaging members as most clearly shown in Fig. 4 are of a "T" shape in section with the width of the stem in the longitudinal direction (vertical direction as seen in Fig.4) of the head of the "T", forming only a minor portion of the length of the head. The two chains have hollow pins and receive extended pins (not shown) therethrough to pass through bores in the stem of the "T" of each member 24. The upper and lower chains or belts 26 are engaged around terminal sprockets 32 mounted on spindles 33 carried in bearings 35 fastened by bolts 37 to respective plates 39 the upper one of which is omitted in Figs. 2 to 4. An upper one of the sprockets is driven from a motive power unit which in this instance comprises an air motor (not shown) but it may be  hydraulic or electric.

5.

The air motor is controlled by a control unit 34 comprising a timer in turn controlled by an output sensor described below. The active run of band 22 and hence of the blades or tongues 24 is that which extends between the references III-III on Figure 1 of the drawings; and it will be seen from Fig. 2 that the tongues or blades protrude slightly beyond the overall casing 65 housing the endless band. At the inlet and outlet ends of the active run sensors or limit switches 36 are provided and these control the actuation of motive power unit. In the event of jamming of articles within the converging guides the sensor 36 at the outlet end will signal the absence of an article leaving the combiner and cause the motive power unit to be activated so that the tongues or blades 24, forming part of the guide walls, are caused to move and release the jamming action of the articles. The drive imparted to band 22 may be such as to drive the active run in the normal direction of article travel, or with certain types or configurations of articles in the opposite sense. Leading into and out of the active run of band 22 are flat plates 38 vertically arranged as guide surfaces for the articles. Alternatively, vertically arranged rollers could be used. Sensors 36 may be pneumatically, hydraulically or electrically operated and the sensor which is arranged at the inlet end operates to prevent drive being applied to the band 22 in the event that no articles are being received by the combiner.

Conveniently the arrangement also includes a time delay which limits the period for which band 22 is driven even if sensor 36 at the outlet end indicates that no articles are leaving the device. This is an override control to prevent excess damage to articles

6.

in the event that clearance of a jam proves impossible, such as might occur when one of the articles topples over. The unit may also incorporate an emergency stop and re-set control.

Instead of the tongues or blades 24 non-rotatable rollers may be provided to extend between the upper and lower chains or belts 26, but whatever element is provided in this connection it is preferably formed with a synthetic resinous material facing so that it will not damage the articles 10 on engagement therewith. In this interest also, the opposite lateral sides of the "T" section members 24 on the face engaging the articles, i.e. that remote from the stems of the "T", are chamfered; and regardless of the member used, it is advantageous to contour the surface of the member to engage the articles to avoid presenting a sharp edge to the articles.

The guide member 14 of the combiner is in the form of a rail 42 integral with a bracket 44 pivoted to fixed rails 46 so that the rail 42 can be adjusted, e.g. by $3^{o}$, in the angle it makes with the conveyor tracks, by means of an adjustment bolt 48 supported in a conveyor side member 50. Such adjustment may be necessary to permit the combiner efficaciously to deal with bottles of different diameter. Further, the bracket comprises an upper and lower rail 52,54, to permit a fallen bottle to ride up over the lower rail and pass between the two rails and also permit broken glass to pass under the lower rail.

At the output of the combiner, so-called twist rails 52 are provided dipping to the level of the single track of the conveyor to permit broken or toppled articles to be off-loaded into a fall out tray 54.

7.

CLAIMS

1.      An article combiner for use with a convey-
or, comprising angled guides or walls which converge
from a spacing wide enough to accommodate batches or
rows of the articles to a spacing which only allows the
articles to pass onwardly in a single file, characterised in that the combiner (18) comprises an endless
band (22) movable in a vertical plane with an active
run (III-III) thereof forming part of a series of guides
(14,38) converging from the article inlet in the direction of article  travel to the article outlet of the
combiner; the band carrying a plurality of outwardly-
protruding, article-engaging members (24), and being
provided with drive means (32,34) for moving the band
consequent upon the absence of articles leaving the
article outlet, signalling a possible jamming of articles
within the guides.

2.      An article combiner according to claim 1,
characterised in that it incorporates a sensor (36)
which senses said absence.

3.      An article combiner according to claim 2,
characterised in that it incorporates a timer (34)
which interupts the drive to the movable band (22)
in the event that articles are not sensed by the sensor
(36) in the outlet within a predetermined time after
actuation of the drive.

4.      An article combiner according to claim 1,
2 or 3, characterised in that the combiner incorporates
a sensor (36) in the vicinity of the article inlet,
which prevents operation of the drive (32,34) of the movable
band (22) in the event that no articles are received
by the combiner.

5.      An article combiner according to any of
claims 1 to 4, characterised in that the article engag-

8.

ing members (24) are contoured to avoid presenting a sharp edge to the articles.

6. An article combiner according to any of claims 1 to 5, characterised in that each member (24) is of a "T" shape in section with the side of the head of the "T" remote from the stem thereof, contacting the articles.

7. An article combiner according to claim 6, characterised in that the opposite lateral edges of said side are chamfered.

8. An article combiner according to claim 6 or 7, characterised in that the width of the stem of the "T" of each member (24) in the longitudinal direction of the head constitutes only a minor portion of the length of the head.

9. An article combiner according to any of the preceding claims, characterised in that a converging guide (14) is in the form of a displaceable rail (42) to permit adjustment of the angle the rail makes with the line of the conveyor (10) bringing articles to the conveyor.

10. An article combiner according to any of the preceding claims, characterised in that lead-in and/or lead-out members (38) are provided to guide articles to or from the active run of the combiner as the case may be.

11. An article combiner according to claim 10, characterised in that the lead-in and/or lead-out members (38) are in the form vertically arranged rollers or flat faced plates.

12. An article combiner according to any of the preceding claims, wherein a converging guide comprises vertically displaced rails (52,54), an upper rail (52) and a lower rail (54), such that a

9.

fallen article on the conveyor (10) may ride up the lower one and pass between the lower and upper rails, and so that broken, parts of an article may pass under the lower rail.

0051431

1/2

Fig.1.

_Fig 2_

_Fig 3_

_Fig 4_

0051431

0051431

| Category | Citation of document with indication, where appropriate, of relevant passages | Relevant to claim |
|---|---|---|
| | US - A - 3 610 396 (MOMIR BABUNOVIC) | |
| | * column 4, line 1 to column 5, line 11; figures * | 1,9 |
| | --- | |
| | FR - A - 2 410 616 (METAL BOX LIM.) | |
| | * claims 4,5,6,7,8; figures * | 1,2,4, 10,11 |
| | --- | |
| | GB - A - 660 186 (NYEBOE & NISSEN A/S) | |
| | * page 3, lines 22-49; figures * | 1,10 |
| | --- | |
| | DE - A - 2 331 781 (WIEFERIG) | |
| | * page 7, line 4 to page 8, line 2; figures * | 1,9 |
| | --- | |
| | US - A - 3 927 757 (FAUTH) | |
| | * abstract; figures * | 1,2,3, 4 |
| | --- | |
| | FR - A - 2 130 496 (J. SCHLITZ BREWING COMP.) | |
| | * claim 1; figures * | 12 |
| | ----- | |

**DOCUMENTS CONSIDERED TO BE RELEVANT**

CLASSIFICATION OF THE APPLICATION (Int. Cl. 3)

B 65 G 47/68

TECHNICAL FIELDS SEARCHED (Int.Cl. 3)

B 65 G
B 67 C

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 21-01-1982 | VAN ROLLEGHEM |

EPO Form 1503.1 06.78